(19) Europäisches Patentamt
European Patent Office
Office européen des brevets

(11) Veröffentlichungsnummer: **0 256 275**
**B1**

(12) **EUROPÄISCHE PATENTSCHRIFT**

(45) Veröffentlichungstag der Patentschrift: **23.01.91**

(21) Anmeldenummer: **87109577.4**

(22) Anmeldetag: **03.07.87**

(51) Int. Cl.⁵: **B 05 D 5/06, B 32 B 27/08, B 44 C 3/02, B 44 C 5/04, C 08 J 7/04**

(54) **Kunststoffbeschichtete Folienbahnen, Platten, Tafeln, Wandpaneele oder Formteile.**

(30) Priorität: **12.08.86 DE 8621594 u**

(43) Veröffentlichungstag der Anmeldung:
**24.02.88 Patentblatt 88/08**

(45) Bekanntmachung des Hinweises auf die Patenterteilung:
**23.01.91 Patentblatt 91/04**

(84) Benannte Vertragsstaaten:
**AT BE CH DE ES FR GB GR IT LI LU NL SE**

(56) Entgegenhaltungen:
**FR-A-2 224 620**
**FR-A-2 259 695**

(73) Patentinhaber: **ALKOR GMBH KUNSTSTOFFE**
**Morgensternstrasse 9 Postfach 71 01 09**
**D-8000 München 71 (DE)**

(72) Erfinder: **Altmann, Heinz**
**Ligsalzstrasse 4**
**D-8035 Gauting (DE)**
Erfinder: **Heitz, Heinrich, Dr.**
**Jägerweg 11**
**D-8034 Germering (DE)**
Erfinder: **Hilf, Wolfgang**
**Sollner Strasse 42**
**D-8000 München 71 (DE)**
Erfinder: **Loos, Helmut**
**Wiesenthauerstrasse 16**
**D-8000 München 60 (DE)**

(74) Vertreter: **Seiler, Siegfried**
**Langhansstrasse 6**
**D-5650 Solingen 11 (DE)**

Courier Press, Leamington Spa, England.

**Beschreibung**

Die vorliegende Erfindung betrifft kunststoffbeschichtete Folienbahnen, zusammengesetzt aus mindestens einer Kunststoffolienbahn oder Kunststoffschicht, die ein oder mehrschichtig ist, von der mindestens eine Schicht oder Beschichtung, vorzugsweise die gesamte Kunststoffolienbahn oder Kunststoffschicht auf der Basis eines Co-, Ter-, Blockpolymerisates oder einer Legierung aus Ethylen und Acrylsäure und/oder Methacrylsäure und/oder Maleinsäure oder Maleinsäureanhydrid und/oder Vinylacetat, einschließlich Ethylen-Acrylsäure-Acrylsäureester, Ethylen-Methacrylsäure-Acrylsäureester oder Ethylen-Methacrylsäure-Methacrylsäureester, mit einem Acrylsäure- und/oder Methacrylsäuregehalt und/oder Maleinsäure- oder Maleinsäureanhydridgehalt von 2 bis 20 Gew.-% und/oder Vinylacetatgehalt von 45 bis 5 Gew.-% besteht, wobei der Schmelzindex der Kunststoffolienbahn oder Kunststoffschicht oder Kunststoffbeschichtung (2,16 kg, 190°C, 10 min) 0,2 bis 300 die Dicke der Mono- oder mehrschichtigen Kunststoffolienbahn oder Kunststoffschicht 10 µm bis 600 µm beträgt.

Es sind bereits Vliese bekannt, die eine ähnliche Kunststoffbeschichtung, jedoch in Form einer Klebeschicht, aufweisen. Das Wasseraufnahmevermögen dieser relativ dicken Vliese ist jedoch im trockenen Zustand größer als 150 g/m², vorzugsweise 200 bis 650 g/m². Derartige Vliese besitzen insofern ein sehr hohes Wasseraufnahmevermögen und werden als Tropfschutz eingesetzt. Diese Eigenschaft ist jedoch für mehrere Anwendungsgebiete störend, dadurch die hohe Wasseraufnahme des Vlieses ein Aufquellen erfolgt, so daß das Aussehen des Vlieses beeinträchtigt oder geschädigt wird. Bei Farbaufdrucken ergibt sich das Risiko, daß sich der Druck bzw. die Farbe löst und durch die Wasseraufnahme Verfärbungen oder Fleckenbildungen erfolgen. Weiterhin besteht die Gefahr, daß durch die hohe Wasseraufnahme eine Ansiedlung von Mikroorganismen wie Schimmelpilzen erfolgen kann.

Aus der FR-A-2 259 695 ist bereits ein thermoverformbares Laminat bekannt, das aus einer Trägerschicht aus einem Thermoplasten, einem niedrigmolekularen Acrylat, einer Farbdruckschicht und einer transparenten Oberschicht auf der Basis eines niedrigmolekularen, teilvernetzten Acrylates besteht. Das Acrylat muß zusätzlich mit einem Katalysator versehen werden. Bevorzugt wird das flüssige Acrylatgemisch für die Trägerschicht auf die mit der Druckschicht versehene Transparentschicht gemäß dem Ausführungsbeispiel der Patentanmeldung bei 38°C aufgegossen. Das Laminat ist widerstandsfähig und schwer delaminierbar. Durch die exotherme Reaktion und das Aufgießen oder Ausbreiten der Bestandteile der Trägerschicht auf die Transparentschicht besteht die Gefahr, daß die Farbdruckschicht beschädigt oder verletzt wird oder bei einer nur teilweise abdeckenden Farbdruckschicht, daß die Transparentschicht getrübt wird. Das Laminat ist weiterhin ohne eine zusätzliche Kleberschicht nicht mit anderen Werkstoffen gemäß der FR-A-2 259 695 verklebbar und wird bevorzugt im Sanitärbereich insbesondere bei der Herstellung von Badewannen und Duschbecken eingesetzt.

Ziel und Aufgabe der vorliegenden Erfindung war es daher, kunststoffbeschichtete Folienbahnen, zusammengesetzt aus mindestens einer Kunststofffolienbahn oder Kunststoffschicht, die ein oder mehrschichtig ist, von der mindestens eine Schicht oder Beschichtung, vorzugsweise die gesamte Kunststoffolienbahn oder Kunststoffschicht auf der Basis eines Co-, Ter-, Blockpolymerisates oder einer Legierung aus Ethylen und Acrylsäure und/oder Methacrylsäure und/oder Maleinsäure oder Maleinsäureanhydrid und/oder Vinylacetat, einschließlich Ethylen-Acrylsäure-Acrylsäureester, Ethylen-Methacrylsäure-Acrylsäureester oder Ethylen-Methacrylsäure-Methacrylsäureester, mit einem Acrylsäure- und/oder Methacrylsäuregehalt und/oder Maleinsäure- oder Maleinsäureanhydridgehalt von 2 bis 20 Gew.-%, vorzugsweise 3 bis 15 Gew.-%, und/oder Vinylacetat von 45 bis 5 Gew.-%, vorzugsweise 35 bis 15 Gew.-%, besteht, zu finden, die ein dekoratives Aussehen aufweisen und selbst bei Einwirkung von Feuchtigkeit und Näße keine wesentlichen Farbbeschädigungen, Farbänderungen und dgl. besitzen.

Die Kunststoffschicht oder Kunststoffolienbahn sollten fest haftend, vorzugsweise ohne Mitverwendung einer Klebstoffschicht, u.a. auf Metall, Kunststoff, Holz oder Holzwerkstoff sein und in Kombination mit der kunststoffbeschichteten Folienbahn dem Formteil verbesserte Eigenschaften ergeben.

Erfindungsgemäß wurde festgestellt, daß diesen Zielen und Aufgaben kunststoffbeschichtete Folienbahnen gerecht werden, die aus mindestens einer Kunststoffolienbahn oder Kunststoff-schicht, die ein oder mehrschichtig ist, zusammengesetzt sind, von der mindestens eine Schicht oder Beschichtung, vorzugsweise die gesamte Kunststoffolienbahn oder Kunststoffschicht auf der Basis eines Co-, Ter-, Blockpolymerisates oder einer Legierung aus Ethylen und Acrylsäure und/oder Methacrylsäure und/oder Maleinsäure oder Maleinsäureanhydrid und/oder Vinylacetat, einschließlich Ethylen-Acrylsäure-Acrylsäureester, Ethylen-Methacrylsäure-Acrylsäureester oder Ethylen-Methacrylsäure-Methacrylsäureester, mit einem Acrylsäure- und/oder Methacrylsäuregehalt und/oder Maleinsäure- oder Maleinsäureanhydridgehalt von 2 bis 20 Gew.-%, vorzugsweise 3 bis 15 Gew.-%, und/oder Vinylacetatgehalt von 45 bis 5 Gew.-%, vorzugsweise 35 bis 15 Gew.-%, besteht, wobei der Schmelzindex der Kunststoffolienbahn oder Kunststoffschicht oder Kunststoffbeschichtung (2,16 kg, 190°C, 10 min) 0,2 bis 300, vorzugsweise 0,5 bis 30, die Dicke der Mono- oder mehrschichtigen Kunststoffolienbahn oder Kunststoffschicht 10 µm bis 600 µm, vorzugsweise 20 µm bis 350 µm, beträgt. Gemäß der Erfindung ist auf der Kunststoffolienbahn oder der Kunststoffschicht partiell oder vollflächig mindestens eine Druckschicht, vorzugsweise eine Farbdruckschicht, und auf der vollflächig oder partiell mit Druckschicht, vorzugsweise Farbschicht, bedruckten Kunststoffolienbahn eine transparente oder translucente Siegelschicht oder Lackschicht vollflächig, die Druckschicht und ggf. nicht bedruckte Stellen der Kunststoffolienbahn, Platte, Tafel oder Kunststoffschicht überdeckend, angeordnet. Die Druckschicht oder Farbdruckschicht weist ein besonders hohes Haftvermögen auf der Kunststoffolienbahn, Platte, Tafel oder Kunststoffschicht auf, so daß eine gute Bedruckbarkeit und Haftfähigkeit gegeben ist.

Gemäß einer Ausführungsform der Erfindung ist die Kunststoffolienbahn auf einer Folienbahn, Platte, einem Wandpaneel, einem Formteil oder einer Schicht aus einem Metall, Kunststoff, Holz und/oder Holzwerkstoff, vorzugsweise ohne Zwischenschaltung einer Klebstoffschicht, angeordnet.

Nach einer anderen bevorzugten Ausführungsform ist auf der transparenten oder translucenten Siegelschicht oder Lackschicht zusätzlich ein Gittergewebe oder Gelege aus oder auf der Basis von Baumwolle, Flockenbast, Leinen, Jute, Zellwolle, Polyester und/oder Glasfasern, angeordnet. Durch diese Anordnung wird ein verbesserter optischer Effekt und eine dekorative Wirkung erzielt.

Nach einer Ausführungsform besteht die Siegelschicht aus einem Thermoplasten, der einen Siegelbereich besitzt, der mindestens 20°C, vorzugsweise mindestens 30°C, unter dem Schmelzpunkt oder unter der unteren Temperaturgrenze des Schmelzbereiches des darüber angeordneten Gewebes oder Geleges liegt.

Zwischen der Kunststoffolienbahn oder Kunststoffschicht auf der Basis eines Co-, Ter-, Blockpolymerisates oder einer Legierung aus Ethylen und Acrylsäure und/oder Methacrylsäure und Maleinsäure oder Maleinsäureanhydrid und/oder Vinylacetat, einschließlich Ethylen-Acrylsäure-Acrylsäureester, Ethylen-Methacrylsäure-Acrylsäureester oder Ethylen-Methacrylsäure-Methacrylsäureester, mit einem Acrylsäure- und/oder Methacrylsäuregehalt und/oder Maleinsäure- oder Maleinsäureanhydridgehalt von 2 bis 20 Gew.-%, vorzugsweise 3 bis 15 Gew.-%, und/oder Vinylacetatgehalt von 45 bis 5 Gew.-%, vorzugsweise 35 bis 15 Gew.-%, und der Druckschicht ist nach einer Ausführungsform ein Vlies, Gewebe, eine Metallfolie oder eine Metallschicht angeordnet.

Dabei weist das Vlies oder Gewebe ein Flächengewicht (bezogen auf den unbehandelten oder Rohzustand des Vlieses oder Gewebes, ohne Druckfarbe und/oder Oberflächenveredlungs- oder Flächenbeschichtungsmittel) von 40 bis 500 g/m², vorzugsweise 60 bis 200 g/m², auf und das Vlies oder Gewebe besteht aus Polyester-, Polyolefin-, Polyamid-, Fluorpolymer- und/oder Glasfasern oder enthält eines oder mehrere derselben zu mehr als 75 Gew.-%, vorzugsweise mehr als 90 Gew.-%, oder das Gewebe ist ein Baumwollgewebe, Flockenbastgewebe, Baumwoll-Leinen-Gewebe, Jutegewebe, Zellwollgewebe oder Glasfasergewebe.

Nach dieser Ausführungsform weist das Vlies oder Gewebe bevorzugt eine Oberflächenstrukturierung auf.

Weiterhin besitzt nach einer bevorzugten Ausführungsform das Vlies oder Gewebe nach dem Aufbringen der Druck- und Siegelschicht ein Wasseraufnahmevermögen von unter 15 g/m², vorzugsweise unter 8 g/m².

Das Vlies ist ein geprägtes, vorzugsweise vorverfestigtes und geprägtes Vlies oder wird im Verlauf des Verfahrens geprägt.

Die kunststoffbeschichteten Folienbahnen, Platten, Tafeln, Wandpaneele oder Formteile werden u.a. als vorgefertigte Bauteile und Wandpaneele für den Schiff-, Fahr-, Flugzeugbau, sowie für Industrie- und Wohnbau, vorzugsweise für Schiffsinnenwandpaneele, Schiffsinnenwanddekorplatten und Schiffsinnenbauteile eingesetzt.

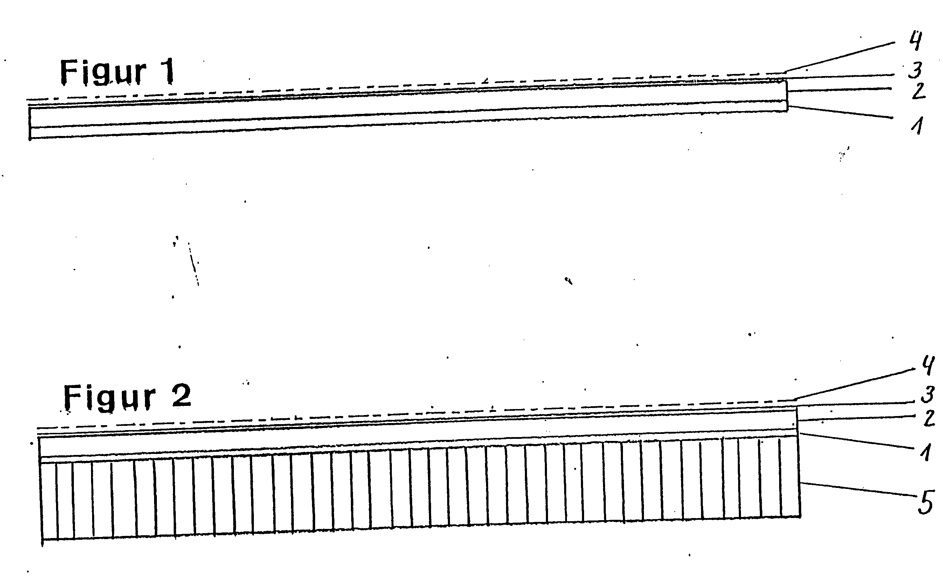

In den Figuren 1 und 2 sind Ausführungsformen der Erfindung schematisch dargestellt, wobei eine zweischichtige Folienbahn (2) (1) bestehend aus einer Kunststoffschicht (2) auf der Basis eines Co-, Ter-, Blockpolymerisates oder einer Legierung aus Ethylen und Acrylsäure und/oder Methacrylsäure und/oder Vinylacetat, die auf einer Polyethylenschicht (1) angeordnet ist. Auf der oberen Fläche enthält die Folienbahn, Platte oder Tafel vollflächig oder partiell eine Farbdruckschicht (3), die von einer transparenten Siegelschicht überdeckt ist. In Figur 2 ist unter Ziffer 5 eine Schicht aus Metall, Kunststoff oder Holzwerkstoff dargestellt.

## Patentansprüche

1. Kunststoffbeschichtete Folienbahnen, zusammengesetzt aus mindestens einer Kunststoffolienbahn, oder Kunststoffschicht, die ein oder mehrschichtig ist, von der mindestens eine Kunststoffolienbahn oder Kunststoffschicht auf der Basis eines Co-, Ter-, Blockpolymerisates oder einer Legierung aus Ethylen und Acrylsäure und/oder Methacrylsäure und/oder Maleinsäure oder Maleinsäureanhydrid und/oder Vinylacetat, einschließlich Ethylen-Acrylsäure-Acrylsäureester, Ethylen-Methacrylsäure-Acrylsäureester oder Ethylen-Methacrylsäure-Methacrylsäureester, mit einem Acrylsäure- und/oder Methacrylsäuregehalt und/oder Maleinsäure- oder Maleinsäureanhydridgehalt von 2 bis 20 Gew.-% und/oder Vinylacetatgehalt von 45 bis 5 Gew.-% besteht, wobei der Schmelzindex der Kunststofffolienbahn, (2,16 kg, 190°C, 10 min) 0,2 bis 300 die Dicke der Mono- oder mehrschichtigen Kunststoffolienbahn oder Kunststoffschicht 10 µm bis 600 µm beträgt und auf der Kunststoffolienbahn, partiell oder vollflächig mindestens eine Druckschicht oder Farbdruckschicht, und auf der vollflächig oder partiell mit Druckschicht oder Farbschicht bedruckten Kunststoffolienbahn eine transparente oder translucente Siegelschicht oder Lackschicht vollflächig, die Druckschicht und ggf. nicht bedruckte Stellen der Kunststoffolienbahn überdeckend, angeordnet ist.

2. Mit Kunststoffbeschichteten Folienbahnen versehene Platten, Tafeln, Wandpaneele oder Formteile, zusammengesetzt aus mindestens einer Kunststoffolienbahn, oder Kunststoffschicht, die ein oder mehrschichtig ist, von der mindestens eine Kunststoffolienbahn oder Kunststoffschicht auf der Basis eines Co-, Ter-, Blockpolymerisates oder einer Legierung aus Ethylen und Acrylsäure und/oder Methacrylsäure und/oder Maleinsäure oder Maleinsäureanhydrid und/oder Vinylacetat, einschließlich Ethylen-Acrylsäure-Acrylsäureester, Ethylen-Methacrylsäure-Acrylsäureester oder Ethylen-Methacrylsäure-Methacrylsäureester, mit einem Acrylsäure- und/oder Methacrylsäuregehalt und/oder Maleinsäure- oder Maleinsäureanhydridgehalt von 2 bis 20 Gew.-% und/oder Vinylacetatgehalt von 45 bis 5 Gew.-% besteht, wobei der Schmelzindex der Kunststofffolienbahn, (2,16 kg, 190°C, 10 min) 0,2 bis 300 die Dicke der Mono- oder mehrschichtigen Kunststofolienbahn oder Kunststoffschicht 10 µm bis 600 µm beträgt und auf der Kunststoffolienbahn, partiell oder vollflächig mindestens eine Druckschicht oder Farbdruckschicht, und auf der vollflächig oder partiell mit Druckschicht oder Farbschicht bedruckten Kunststoffolienbahn eine transparente oder translucente Siegelschicht oder Lackschicht vollflächig, die Druckschicht und ggf. nicht bedruckte Stellen der Kunststoffolienbahn überdeckend, angeordnet ist, wobei die kunststoffbeschichteten Folienbahnen auf einer Platte, einem Wandpaneel, einem Formteil oder einer Schicht aus einem Metall, Holz und/oder Holzwerkstoff, vorzugsweise ohne Zwischenschaltung einer Klebstoffschicht, angeordnet sind.

3. Kunststoffbeschichtete Folienbahnen, Platten, Tafeln, Wandpaneele oder Formteile, nach Ansprüchen 1 und 2, dadurch gekennzeichnet, daß sie aus mindestens einer Kunststoffolienbahn oder Kunststoffschicht, die ein oder mehrschichtig ist, zusammengesetzt ist, von der mindestens eine Kunststoffolienbahn oder Kunststoffschicht auf der Basis eines Co-, Ter-, Blockpolymerisates oder einer Legierung aus Ethylen und Acrylsäure und/oder Methacrylsäure und/oder Maleinsäure oder Maleinsäureanhydrid und/oder Vinylacetat, ein-schließlich Ethylen-Acrylsäure-Acrylsäureester, Ethylen-Methacrylsäure-Acrylsäureester oder Ethylen-Methacrylsäure-Methacrylsäureester, mit einem Acrylsäure- und/oder Methacrylsäuregehalt und/oder Maleinsäure- oder Maleinsäureanhydridgehalt von 3 bis 15 Gew.-% und/oder Vinylacetatgehalt von 35 bis 15 Gew.-% besteht, wobei der Schmelzindex der Kunststofffolienbahn oder Kunststoffschicht oder Kunststoffbeschichtung (2,16 kg, 190°C, 10 min) 0,5 bis 30 die Dicke der Mono- oder mehrschichtigen Kunststoffolienbahn oder Kunststoffschicht 20 µm bis 350 µm beträgt und auf der Kunststoffolienbahn partiell oder vollflächig mindestens eine Druckschicht oder Farbdruckschicht, und auf der vollflächig oder partiell mit Druckschicht oder Farbschicht bedruckten Kunststoffolienbahn eine transparente oder translucente Siegelschicht oder Lackschicht vollflächig, die Druckschicht und ggf. nicht bedruckte Stellen der Kunststoffolienbahn überdeckend, angeordnet ist.

4. Kunststoffbeschichtete Folienbahnen, Platten, Tafeln, Wandpaneele oder Formteile nach einem oder mehreren der Ansprüche 1 bis 3, dadurch gekennzeichnet, daß auf der transparenten oder translucenten Siegelschicht oder Lackschicht zusätzlich ein Gittergewebe oder Gelege, vorzugsweise ein offenes Gewebe oder Gelege aus oder auf der Basis von Baumwolle, Flockenbast, Leinen, Jute, Zellwolle, Polyester und/oder Glasfasern, angeordnet ist.

5. Kunststoffbeschichtete Folienbahnen, Platten, Tafeln, Wandpaneele oder Formteile nach einem oder mehreren der Ansprüche 1 bis 4, dadurch gekennzeichnet, daß die Siegelschicht aus einem Thermoplasten besteht, der einen Siegelbereich besitzt, der mindestens mindestens 20°C, vorzugsweise mindestens 30°C, unter dem Schmelzpunkt oder unter der unteren Temperaturgrenze des Schmelzbereiches des darüber angeordneten Gewebes oder Geleges liegt.

6. Kunststoffbeschichtete Folienbahnen, Platten, Tafeln, Wandpaneele oder Formteile nach einem oder mehreren der Ansprüche 1 bis 5, dadurch gekennzeichnet, daß zwischen der Kunststoffolienbahn, oder Kunststoffschicht auf der Basis eines Co-, Ter-, Blockpolymerisates oder einer Legierung aus Ethylen und Acrylsäure und/oder Methacrylsäure und Maleinsäure oder Maleinsäureanhydrid und/oder Vinylacetat, einschließlich Ethylen-Acrylsäure-Acrylsäureester, Ethylen-Methacrylsäure-Acrylsäureester oder Ethylen-Methacrylsäure-Methacrylsäureester, mit einem Acrylsäure- und/oder Methacrylsäuregehalt und/oder Maleinsäure- oder Maleinsäureanhydridgehalt von 2 bis 20 Gew.-%, vorzugsweise 3 bis 15 Gew.-%, und/oder Vinylacetatgehalt von 45 bis 5 Gew.-%, vorzugsweise 35 bis 15 Gew.-%, und der Druckschicht ein Vlies, Gewebe, eine Metallfolie oder eine Metallschicht angeordnet ist.

7. Kunststoffbeschichtete Folienbahnen, Platten, Tafeln, Wandpaneele oder Formteile, nach einem oder mehreren der Ansprüche 1 bis 6, dadurch gekennzeichnet, daß das Vlies oder Gewebe ein Flächengewicht (bezogen auf den unbehandelten oder Rohzustand des Vlieses oder Gewebes, ohne Druckfarbe und/oder Oberflächenveredlungs- oder Flächenbeschichtungsmittel) von 40 bis 500 g/m², vorzugsweise 60 bis 200 g/m², aufweist und das Vlies oder Gewebe aus Polyester-, Polyolefin-, Polyamid-, Fluorpolymer und/oder Glasfasern besteht oder eines oder mehrere derselben zu mehr als 75 Gew.-%, vorzugsweise mehr als 90 Gew.-%, enthält, oder das Gewebe ein Baumwollgewebe, Flockenbastgewebe, Baumwoll-Leinen-Gewebe, Jutegewebe, Zellwollgewebe oder Glasfasergewebe ist.

## Revendications

1. Feuilles en bande recouvertes de matières synthétiques, constituées par au moins une feuille en bande en matière synthétique ou une couche en matière synthétique, comprenant une ou plusieurs couches, dont au moins une feuille en bande en matière synthétique ou une couche en matière synthétique est à base d'un copolymère, d'un terpolymère, d'un polymère à blocs ou d'un alliage d'éthylène et d'acide acrylique et/ou d'acide méthacrylique et/ou d'acide maléique ou d'anhydride maléique et/ou d'acétate de vinyle, en ce inclus les copolymères éthylène-acide acrylique-ester acrylique, éthylène-acide méthacrylique-ester acrylique ou éthylène-acide méthacrylique-ester méthacrylique, présentant une teneur en acide acrylique et/ou en acide méthacrylique et/ou une teneur en acide maléique ou en anhydride maléique de 2 à 20% en poids et/ou une teneur en acétate de vinyle de 45 à 5% en poids, l'indice de fusion de la feuille en bande en matière synthétique (2,16 kg, 190°C, 10 min.) étant de 0,2 à 300, l'épaisseur de la feuille en bande en matière synthétique ou de la couche en matière synthétique monocouche ou multicouche étant de 10 à 600 μm, la feuille en bande en matière synthétique ayant reçu au moins une couche imprimée ou une couche imprimée colorée, totale ou partielle, et la feuille en bande en matière synthétique, totalement ou partiellement imprimée d'une couche d'impression ou d'une couche colorée, ayant reçu une couche de scellement ou une couche de laque transparente ou translucide qui recouvre toute la surface de la couche imprimée et, le cas échéant, des parties non imprimées de la feuille en bande en matière synthétique.

2. Plaques, panneaux, panneaux muraux ou objets moulés pourvus de feuilles en bande recouvertes de matières synthétiques, constitués par au moins une feuille en bande en matière synthétique ou une couche en matière synthétique, comprenant une ou plusieurs couches, dont au moins une feuille en bande en matière synthétique ou une couche en matière synthétique est à base d'un copolymère, d'un terpolymère, d'un polymère à blocs ou d'un alliage d'éthylène et d'acide acrylique et/ou d'acide méthacrylique et/ou d'acide maléique ou d'anhydride maléique et/ou d'acétate de vinyle, en ce inclus les copolymères éthylène-acide acrylique-ester acrylique, éthylène-acide méthacrylique-ester acrylique ou éthylène-acide méthacrylique-ester méthacrylique, présentant une teneur en acide acrylique et/ou en acide méthacrylique et/ou une teneur en acide maléique ou en anhydride maléique de 2 à 20% en poids et/ou une teneur en acétate de vinyle de 45 à 5% en poids, l'indice de fusion de la feuille en bande en matière synthétique (2,16 kg, 190°C, 10 min.) étant de 0,2 à 300, l'épaisseur de la feuille en bande en matière synthétique ou de la couche en matière synthétique, monocouche ou multicouche, étant de 10 à 600 μm, la feuille en bande en matière synthétique ayant reçu au moins une couche imprimée ou une couche imprimée colorée, totale ou partielle, et la feuille en bande en matière synthétique, totalement ou partiellement imprimée d'une couche imprimée ou d'une couche colorée, ayant reçu une couche de scellement ou une couche de laque transparente ou translucide qui recouvre toute la surface de la couche imprimée et, le cas échéant, des parties non imprimées de la feuille en bande en matière synthétique, les feuilles en bande recouvertes de matières synthétiques étant disposées sur une plaque, un panneau mural, un objet moulé ou une couche d'un métal, de bois et/ou de matériau à base de bois, de préférence sans interposition d'une couche adhésive.

3. Feuilles en bande, plaques, panneaux, panneaux muraux ou objets moulés recouverts de matières synthétiques selon les revendications 1 et 2, caractérisés en ce qu'ils sont constitués par au moins une feuille en bande en matière synthétique ou une couche en matière synthétique, comprenant une ou plusieurs couches, dont au moins une feuille en bande en matière synthétique ou une couche en matière synthétique est à base d'un copolymère, d'un terpolymère, d'un polymère à blocs ou d'un alliage d'éthylène et d'acide acrylique et/ou d'acide méthacrylique et/ou d'acide maléique ou d'anhydride maléique et/ou d'acétate de vinyle, en ce inclus des copolymères éthylène-acide acrylique-ester acrylique, éthylène-acide méthacrylique-ester acrylique ou éthylène-acide méthacrylique-ester méthacrylique, présentant une teneur en acide acrylique et/ou en acide méthacrylique et/ou une teneur en acide maléique ou en anhydride maléique de 3 à 15% en poids et/ou une teneur en acétate de vinyle de 35 à 15% en poids, l'indice de fusion de la feuille en bande en matière synthétique ou de la couche en matière synthétique ou du recouvrement en matière synthétique (2,16 kg, 190°C, 10 min.) étant de 0,5 à 30, l'épaisseur de la feuille en bande en matière synthétique ou de la couche en matière synthétique, monocouche ou multicouche, étant de 20 à 350 μm, la feuille en bande en matière synthétique ayant reçu au moins une couche imprimée ou une couche imprimée colorée, totale ou partielle, et la feuille en bande en matière synthétique, totalement ou partiellement imprimée d'une couche imprimée ou d'une couche colorée, ayant reçu une couche de scellement ou une couche de laque transparente ou translucide qui recouvre toute la surface de la couche imprimée et, le cas échéant, des parties non imprimées de la feuille en bande en matière synthétique.

4. Feuilles en bande, plaques, panneaux, panneaux muraux ou objets moulés recouverts de matières synthétiques selon les revendications 1 et 3, caractérisés en ce qu'on dispose, en plus, sur la couche de scellement ou la couche de laque transparente ou translucide un tissu en réseau ou un mat, de préférence un tissu à mailles lâches ou un mat de ou à base de coton, de fibre floquée, de lin, de jute, de laine de cellulose, de polyester et/ou de fibres de verre.

5. Feuilles en bande, plaques, panneaux, panneaux muraux ou objets moulés recouverts de matières synthétiques selon les revendications 1 et 4, caractérisés en ce que la couche de scellement est constituée par une matière thermoplastique qui présente une plage de scellement inférieure d'au moins 20°C, de préférence d'au moins 30°C, au point de fusion ou à la limite de température inférieure de la plage de fusion du tissu ou du mat qui est disposé sur celle-ci.

6. Feuilles en bande, plaques, panneaux, panneaux muraux ou objets moulés recouverts de matières synthétiques selon les revendications 1 et 5, caractérisés en ce qu'entre la feuille en bande en matière synthétique ou la couche en matière synthétique à base d'un copolymère, d'un terpolymére, d'un polymère à blocs ou d'un alliage d'éthyléne et d'acide acrylique et/ou d'acide méthacrylique et d'acide maléique ou d'anhydride maléique et/ou d'acétate de vinyle, en ce inclus des copolymères éthylène-acide acrylique-ester acrylique, éthylène-acide méthacrylique-ester acrylique ou éthylène-acide mèthacrylique-ester méthacrylique, présentant une teneur en acide acrylique et/ou en acide méthacrylique et/ ou une teneur en acide maléique ou en anhydride maléique de 2 à 20% en poids, de préférence de 3 à 15% en poids, et./ou une teneur en acétate de vinyle de 45 à 5% en poids, de préférence de 35.à 15% en poids, et la couche imprimée, on a disposé un non-tissé, un tissu, une feuille de métal ou une couche de métal.

7. Feuilles en bande, plaques, panneaux, panneaux muraux ou objets moulés recouverts de matières synthétiques selon une ou plusieurs des revendications 1 à 6, caractérisés en ce que le non-tissé ou le tissu présente un grammage (par rapport à l'état non traité ou brut du non-tissé ou du tissu, sans couleur imprimée et/ou d'agent d'ennoblissement de surface ou d'agent de recouvrement de surface) compris entre 40 et 500 g/m², de préférence entre 60 à 200 g/m², et en ce que le non-tissè ou le tissu est constitué par des fibres de polyester, de polyolèfine, de polyamide, de polymère fluoré et/ou de verre et contient un ou plusieurs de ceux-ci en une quantité supérieure à 75% en poids, de préférence supérieure à 90% en poids, ou le tissu est un tissu de coton, de fibre floquée, d'un mélange coton-lin, de jute, de laine de cellulose et/ou de fibres de verre.

**Claims**

1. Plastic-coated film webs, composed of at least one plastic film web or plastic layer, which is one layer or multi-layer, of which at least one plastic film web or plastic layer [consists] on the basis of a copolymer, terpolymer, block polymer or a compound of ethylene and acrylic acid and/or methacrylic acid and/or maleic acid or maleic acid anhydride and/or vinyl acetate, including ethylene-acrylic acid-acrylic acid ester, ethylene-methacrylic acid-acrylic acid ester or ethylene-methacrylic acid-methacrylic acid ester, with an acrylic acid and/or methacrylic acid content and/ or maleic acid or maleic acid anhydride content of 2 to 20% by weight and/or vinyl acetate content of 45 to 5% by weight, with the melt index of the plastic film web (2.16 kg, 190°C, 10 min) being 0.2 to 300, the thickness of the mono-layer or multi-layer plastic film web or plastic layer being 10 µm to 600 µm, and at least one printed layer or colour printed layer is arranged on the plastic film web, partially or over the full surface and a transparent or translucent sealing layer or coating layer is arranged over the full surface, covering the printed layer and optionally any non-printed points of the plastic film web, on the plastic film web which is printed over the full surface or partially with printed layer or colour layer.

2. Plates, panels, wall panels or shaped parts provided with plastic-coated film webs, composed at least one plastic film web, or plastic layer, which is one-layer or multi-layer, of which at least one plastic film web or plastic layer [consists] on the basis of a copolymer, terpolymer, block polymer or a compound of ethylene and acrylic acid and/or methacrylic acid and/or maleic acid or maleic acid anhydride and/or vinyl acetate, including ethylene-acrylic acid-acrylic acid ester, ethylene-methacrylic acid-acrylic acid ester or ethylene-methacrylic acid-methacrylic acid ester, with an acrylic acid and/or methacrylic acid content and/or maleic acid or maleic acid anhydride content of 2 to 20% by weight and/or vinyl acetate content of 45 to 5% by weight, with the melt index of the plastic film web (2.16 kg, 190°C, 10 min) being 0.2 to 300, the thickness of the mono-layer or multi-layer plastic film web or plastic layer being 10 µm to 600 µm, and at least one printed layer or colour printed layer is arranged on the plastic film web, partially or over the full surface and a transparent or translucent sealing layer or coating layer is arranged over the full surface, covering the printed layer and optionally any non-printed points of the plastic film web, on the plastic film web which is printed over the full surface or partially with printed layer or colour layer, with the plastic-coated film webs being árranged on a plate, a wall panel, a shaped part or a layer of a metal, wood and/or timber material, preferably without the interposition of an adhesive layer.

3. Plastic-coated film webs, plates, panels, wall panels or shaped parts according to Claims 1 and 2, characterised in that they are composed of at least one plastic film web or plastic layer which is one-layer or multi-layer, of which at least one plastic film web or plastic layer [consists] on the basis of a copolymer, terpolymer, block polymer or a compound of ethylene and acrylic acid and/or methacrylic acid and/or maleic acid or maleic acid anhydride and/or vinyl acetate, including ethylene-acrylic acid-acrylic acid ester, ethylene methacrylic acid-acrylic acid ester or ethylene methacrylic acid-methacrylic acid ester, with an acrylic acid and/or methacrylic acid content and/ or maleic acid or maleic acid anhydride content of 3 to 15% by weight and/or vinyl acetate content of 35 to 15% by weight, with the melt index of the plastic film web or plastic layer or plastic coating (2.16 kg, 190°C, 10 min) being 0.5 to 30, the thickness of the mono-layer or multi-layer plastic film web or plastic layer being 20 µm to 350 µm, and at least one printed layer or colour printed layer is arranged on the plastic film web, partially or over the full surface and a transparent or translucent sealing . layer or coating layer is arranged over the full surface, covering the printed layer and optionally any non-printed points of the plastic film web, on the plastic film web which is printed over the full surface or partially with printed layer or colour layer.

4. Plastic-coated film webs, plates, panels, wall panels or shaped parts according to one or more of Claims 1 to 3, characterised in that a lattice woven material or layered structure, preferably an open woven material or layered structure consisting of or on the basis of cotton, cottonised flax, linen, jute, viscose staple fibre, polyester and/or glass fibres, is additionally arranged on the transparent or translucent sealing layer or coating layer.

5. Plastic-coated film webs, plates, panels, wall panels or shaped parts according to one or more of Claims 1 to 4, characterised in that the sealing layer consists of a thermoplastic which has a sealing range which lies at least 20°C, preferably at least 30°C, below the melting point or below the lower temperature limit of the melting range of the woven material or layered structure arranged thereover.

6. Plastic-coated film webs, plates, panels, wall panels or shaped parts according to one or more of Claims 1 to 5, characterised in that a non-woven material, a woven material, a metal foil or a metal layer is arranged between the plastic film web, or plastic layer on the basis of a copolymer, terpolymer, block polymer or a compound of ethylene and acrylic acid and/or methacrylic acid and maleic acid or maleic acid anhydride and/or vinyl acetate, including ethyleneacrylic acid-acrylic acid ester, ethylene-methacrylic acid-acrylic acid ester or ethylene-methacrylic acid-methacrylic acid ester, with an acrylic acid and/or methacrylic acid content and/or maleic acid or maleic acid anhydride content of 2 to 20% by weight, preferably 3 to 15% by weight, and/or vinyl acetate content of 45 to 5% by weight, preferably 35 to 15% by weight, and the printed layer.

7. Plastic-coated film webs, plates, panels, wall panels or shaped parts, according to one or more of Claims 1 to 6, characterised in that the non-woven material or woven material has a weight per unit surface area (relative to the untreated or raw state of the non-woven material or woven material, without printing ink and/or surface finishing agent or surface coating agent) of 40 to 500 g/m², preferably 60 to 200 g/m², and the non-woven material or woven material consists of polyester fibres, polyolefin fibres, polyamide fibres, fluoropolymer fibres and/or glass fibres or contains more than 75% by weight, preferably more than 90% by weight, of one or more thereof, or the woven material is a woven cotton material, woven cottonised flax material, woven cotton/linen material, woven jute material, woven viscose staple fibre material or woven glass fibre material.

# Figur 1

# Figur 2